(19)

**Europäisches Patentamt**

**European Patent Office**

**Office européen des brevets**

(11) **EP 3 120 997 A1**

(12) **EUROPÄISCHE PATENTANMELDUNG**

(43) Veröffentlichungstag:
**25.01.2017  Patentblatt 2017/04**

(21) Anmeldenummer: **16178975.5**

(22) Anmeldetag: **12.07.2016**

(51) Int Cl.:
*B32B 5/02* (2006.01)       *B32B 5/08* (2006.01)
*B32B 5/16* (2006.01)       *B32B 5/22* (2006.01)
*B32B 5/24* (2006.01)       *B32B 5/26* (2006.01)
*B32B 5/30* (2006.01)       *D04H 1/413* (2012.01)
*D04H 1/435* (2012.01)      *D04H 1/4374* (2012.01)
*D04H 1/54* (2012.01)       *D04H 1/541* (2012.01)
*D04H 1/544* (2012.01)      *D04H 1/55* (2012.01)
*D04H 1/559* (2012.01)      *D04H 1/56* (2006.01)
*D04H 13/00* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(30) Priorität: **24.07.2015   DE 102015009370**

(71) Anmelder: **Carl Freudenberg KG
69469 Weinheim (DE)**

(72) Erfinder:
• **Roth, Michael, Dr.
55131 Mainz (DE)**
• **Arnold, Anette
64342 Seeheim-Jugenheim (DE)**
• **Zimmer, Bjoern
66917 Wallhalben (DE)**
• **Rudek, Peter
67551 Worms (DE)**

(54) **AEROGELVLIESSTOFF**

(57)     Die Erfindung betrifft ein Flächengebilde umfassend wenigstens eine ein Fasermaterial enthaltende Trägerschicht und wenigstens eine Funktionsschicht, wobei die Funktionsschicht mit Aerogelpartikeln beladene Bindefasern enthält, wobei die Bindefasern in Form einer dreidimensionalen Matrix vorliegen, in der die Aerogelpartikel aufgenommen sind und wobei die Aerogelpartikel zumindest teilweise mit den Bindefasern stoffschlüssig verbunden vorliegen.

Fig.1

EP 3 120 997 A1

## Beschreibung

Die Erfindung betrifft ein Flächengebilde, das mindestens eine Trägerschicht, mindestens eine Funktionsschicht und Aerogel-Partikel aufweist, ein Verfahren zu seiner Herstellung sowie seine Verwendung.

Aerogele sind hochporöse Festkörper, bei denen bis zu 99,98 % des Volumens aus Poren bestehen. Es gibt verschiedene Arten von Aerogelen, wobei Aerogele auf Silicatbasis am weitesten verbreitet sind. In Spezialfällen kommen aber auch andere Materialien, beispielsweise auf Kunststoff- oder Kohlenstoffbasis, zur Anwendung. Aerogele weisen in der Regel eine dendritische Struktur auf, d.h. eine Verästelung von Partikelketten mit sehr vielen Zwischenräumen in Form von offenen Poren.

Die Porengröße liegt im Nanometerbereich und die inneren Oberflächen können mit bis zu 1000 m$^2$ pro Gramm außergewöhnlich groß werden. Dadurch können Aerogele u. a. als Isolier- oder Filtermaterial eingesetzt werden. Darüber hinaus besteht die Möglichkeit, biologisch aktive Moleküle, Proteine oder gar ganze Zellen einzulagern. Die hohe optische Transparenz, zusammen mit einem Brechungsindex von etwa 1,007 bis 1,24 und einem typischen Wert von 1,02, macht Aerogele auch in optischer Hinsicht interessant. Eine weitere Eigenschaft ist die mit einem typischen Wert von $100\,\frac{m}{s}$ geringe Schallgeschwindigkeit und damit verknüpft auch geringe akustische Feldimpedanz innerhalb von Aerogelen. Zudem weisen Aerogele, insbesondere solche mit hohen Porositäten eine äußerst geringe thermische Leitfähigkeit auf und finden deshalb Anwendung als Wärmeisolationsmaterialien.

Die hohe Porosität führt aber auch zu einer geringen mechanischen Stabilität sowohl des Gels, aus dem das Aerogel getrocknet wird, als auch des getrockneten Aerogels selbst.

Grundsätzlich können alle Metalloxide, Polymere und einige andere Stoffe als Ausgangsbasis für die Aerogelsynthese mittels eines Sol-Gel-Prozesses verwendet werden. Aerogele können dadurch hergestellt werden, dass ein Gel aus einem gallertartigen Stoff, beispielsweise Kieselsäure, unter extremen Bedingungen getrocknet wird. Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen u.a. Aerogele im engeren Sinne und Xerogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes entfernt wird. Hieran ist vorteilhaft, dass durch diese speziellen Trocknungsbedingungen die Dimensionsstabilität gewährleistet wird.

Wird die Flüssigkeit des Gels dagegen unterkritisch, beispielsweise unter Bildung einer Flüssig-Dampf-Grenzphase entfernt, dann bezeichnet man das entstandene Gel als Xerogel.

Erfindungsgemäß können auch Aerogele eingesetzt werden, die nicht unter kritischen Bedingungen getrocknet werden. Bei dieser Vorgehensweise kann die Dimensionsstabilität im Trocknungsprozess durch eine Funktionalisierung, vorzugsweise Silanisierung, der Gel-Precursor Oberfläche erhalten werden (funktionalisierte Aerogele). Vorteilhaft an den funktionalisierten Aerogelen ist, dass sie durch die Funktionalisierung hydrophob eingestellt werden können und somit im Einsatz weniger Feuchtigkeit aufnehmen. Darüber hinaus sind sie kostengünstiger als Aerogele im engeren Sinne, da sie kontinuierlich hergestellt werden können.

Es ist anzumerken, dass es sich bei den erfindungsgemäßen Gelen um Aerogele im Sinne von Gel mit Luft als Dispersionsmittel handelt, d.h. um Aerogele im weiteren Sinne.

Der Formgebungsprozess des Aerogels wird während des Sol-Gel-Übergangs abgeschlossen. Nach Ausbildung der festen Gelstruktur kann die äußere Form nur noch durch Zerkleinerung, beispielsweise Mahlen, verändert werden, da das Material für eine andere Form der Bearbeitung zu brüchig ist.

Für viele Anwendungen ist es jedoch notwendig, das Aerogel in Gestalt bestimmter Formkörper einzusetzen. So sind beispielsweise zur Isolierung von gewölbten oder unregelmäßig geformten Flächen flexible Platten bzw. Matten aus einem Dämmstoff notwendig. Die Herstellung derartiger Formkörpern ist im Prinzip schon während der Gelherstellung möglich. Jedoch führt der während der Herstellung typischerweise notwendige, diffusionsbestimmte Austausch von Lösemitteln und die ebenfalls diffusionsbestimmte Trocknung in diesem Fall zu unwirtschaftlich langen Produktionszeiten.

Es ist daher wünschenswert die Möglichkeit zu erhalten erst im Anschluss an die Aerogel- Herstellung, also nach der Trocknung, einen Formgebungsschritt durchzuführen, ohne dass eine wesentliche Änderung der inneren Struktur des Aerogels im Hinblick auf die Anwendung stattfindet.

EP 0 799 343 B1 betrifft ein Verbundmaterial, das mindestens eine Lage Faservlies und Aerogel-Partikel aufweist, ein Verfahren zu seiner Herstellung sowie seine Verwendung. Das Faservlies besteht aus mindestens einem Bicofasermaterial, das zur Bindung der Aerogelpartikel genutzt wird. Der bevorzugte Fasertiter der Bicofasern liegt bei 2 bis 20 dtex. Die Fasern in dem Verbundmaterial haben bedingt durch das Vlieslegeverfahren eine im Prinzip 2-dimensionale Anordnung, d.h. die Ausrichtung der Fasern in x-und y-Richtung ist deutlich stärker als in z-Richtung. Hierdurch ist die Klebekraft in z-Richtung (des Verbundmaterials) gering. Zudem werden relativ dicke Fasern verwendet, wodurch nur sehr wenige Adhesionspunkte zwischen Aerogelpartikeln und Fasern vorhanden sind. Bedingt dadurch haben derartige Materialien eine geringe mechanische Festigkeit und Aerogelpartikel können aus dem Verbundstoff, insbesondere an den Kanten, herausrieseln. Dazu kommt, dass sich durch die geringe mechanische Stabilität die thermischen Eigenschaften verschlechtern, und die Handhabung durch die freitretenden Aerogelstäube kritisch ist.

US 2006/0125158 A1 beschreibt ein Verfahren für die Herstellung von Aerogelvliesstoffen. Der Prozess beinhaltet das Herstellen eines wässrigen Slurries aus Aerogelen, Fasern und Netzmitteln, das Ablegen des Slurries und das anschließende Trocknen und Kalandrieren des Verbundes. Nachteilig an der Verwendung eines wässrigen Slurries mit Tensiden ist, dass die Aerogele Wasser aufnehmen können, was die Wärmeleitfähigkeit erhöht und somit die Isolationswirkung verschlechtert. Zudem weisen die Fasern herstellungsbedingt eine lediglich 2-dimensionale Anordnung (in der x-y Ebene) auf, da sie sich in den eingesetzten, der Papierherstellung ähnlichen, Nasslegeverfahren, in der Horizontalen verteilen. Auch dies führt zu einer geringen Festigkeit in z-Richtung und einem erheblichen Herausrieseln der Aerogele mit den zuvor genannten Nachteilen.

Die US 2010/0107381 A1 beschreibt die Herstellung eines Aerogelvliesstoffes / Komposites aus Fasern und Aerogel, wobei das fertige Aerogel / Faser Komposit zur Verbesserung der mechanischen Stabilität in Z-Richtung in einem Nadelstuhl vernadelt wird. Die Vernadelung ist in dem beschriebenen Verfahren notwendig, da ansonsten keine zufrieden stellenden mechanischen Stabilitäten erhalten werden können. Um die mechanische Stabilität zu erhöhen, werden die Komposite deshalb mit Nadeln in Z-richtung verfestigt. Allerdings ist hier nur eine begrenzte Anzahl an Einstichpunkten möglich, da die mechanische Kraft der Nadeln die Struktur der scher-instabilen Aerogelpartikel zerstört. Das heißt die mechanische Stabilität und somit das Herausrieseln der Partikel wird nur geringfügig verbessert. Zudem entstehen durch das Vernadeln Löcher in z-Richtung (d.h. orthogonal zur Vliesstoffoberfläche), die Kanäle für die Konvektion von Luft ergeben und somit wiederum die thermische Isolation verschlechtern. Die Stärke von Aerogelen ist aber gerade eine verringerte Konvektion der Luft - diese wird durch das beschriebene Verfahren jedoch beeinträchtigt.

Aufgabe der vorliegenden Erfindung ist es daher, ein Verbundmaterial auf der Basis von Aerogelpartikeln bereitzustellen, das eine niedrige Wärmeleitfähigkeit aufweist, das mechanisch stabil ist und die einfache Herstellung von Formkörpern, beispielsweise Matten oder Platten, erlaubt.

Die Aufgabe wird gelöst durch ein Flächengebilde umfassend wenigstens eine ein Fasermaterial enthaltende Trägerschicht und wenigstens eine Funktionsschicht, wobei die Funktionsschicht mit Aerogelpartikeln beladene Bindefasern enthält, wobei die Bindefasern in Form einer dreidimensionalen Matrix vorliegen, in der die Aerogelpartikel aufgenommen sind und wobei die Aerogelpartikel zumindest teilweise mit den Bindefasern stoffschlüssig verbunden vorliegen.

Das erfindungsgemäße Flächengebilde zeichnet sich dadurch aus, dass es eine Funktionsschicht aufweist, die mit Aerogelpartikeln beladene Bindefasern enthält, die in Form einer dreidimensionalen Matrix vorliegen. Aufgrund der dreidimensionalen Matrixstruktur können die Aerogelpartikel stabil und in Bezug auf alle Raumrichtungen verliersicher eingebunden werden. Die Verliersicherheit kann in einem Zefir-Messgerät für Luft-Druckverluste bestimmt werden. Hierfür wird das erfindungsgemäße Flächengebilde zunächst vor der Messung gewogen und im Anschluss mit einer definierten Luftmenge (200 m³/h) für eine Dauer von 2 Minuten durchströmt. Im Anschluss wird das Flächengebilde wieder gewogen und der Gewichtsverlust (vorher zu nachher) prozentual bestimmt. In einer bevorzugten Ausführungsform der Erfindung verbleiben mehr als 90 Gew.%, bevorzugt 90 bis 99,99 Gew.%, besonders bevorzugt 98 bis 99,9 Gew.% der Aerogelpartikel im Flächengebilde.

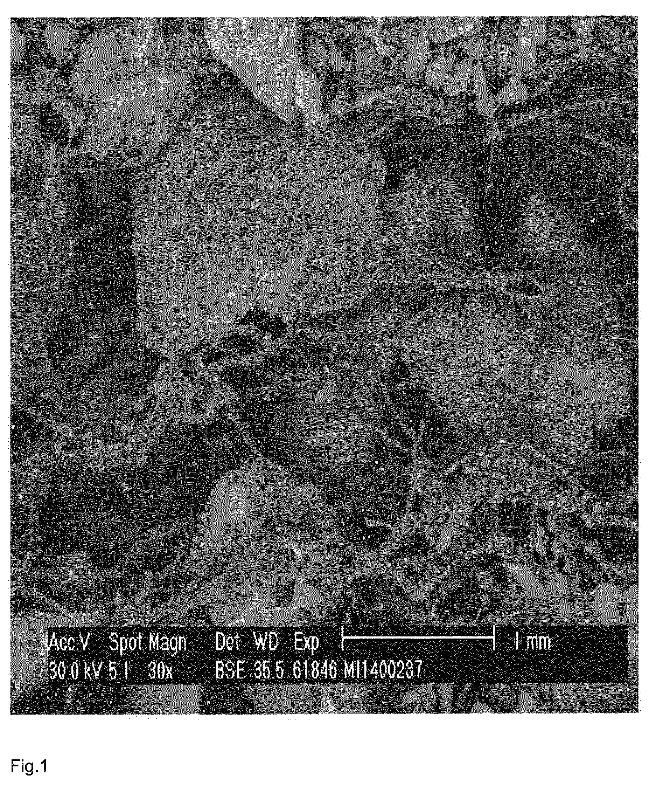

Die dreidimensionale Matrix kann als eine Art dreidimensionales Netz angesehen werden, in dem die Aerogelpartikel eingebettet sind. Dieses dreidimensionale Netz kann in mikroskopischen Aufnahmen eine Maschenstruktur zeigen, wie in Figur 1 gezeigt. Hierdurch können visuell bestimmte Parameter der Matrixstruktur bestimmt werden.

So könnten in der Matrixstruktur einzelne Maschen als 2-dimensionale Projektion detektierbar sein.

In einer Ausführungsform der Erfindung sind in einer mikroskopischen Aufnahme eines Querschnittes der Funktionsschicht des erfindungsgemäßen Flächengebildes, bezogen auf einen Ausschnitt mit den Abmessungen von 4 mm x 3 mm, bei 30-facher Vergrößerung mindestens 2, vorzugsweise mindestens 5, noch bevorzugter mindestens 10 Maschen mit einem fiktiven Maschendurchmesser von mindestens 100 $\mu$m detektierbar.

So könnten in einer Ausführungsform der Erfindung in einer mikroskopischen Aufnahme eines Querschnittes der Funktionsschicht des erfindungsgemäßen Flächengebildes, bezogen auf einen Ausschnitt mit den Abmessungen von 4 mm x 3 mm, bei 30-facher Vergrößerung 2 bis 10000, beispielsweise 5 bis 1000, und/oder 10 bis 500 Maschen mit einem fiktiven Maschendurchmesser von mindestens 100 $\mu$m detektierbar sein.

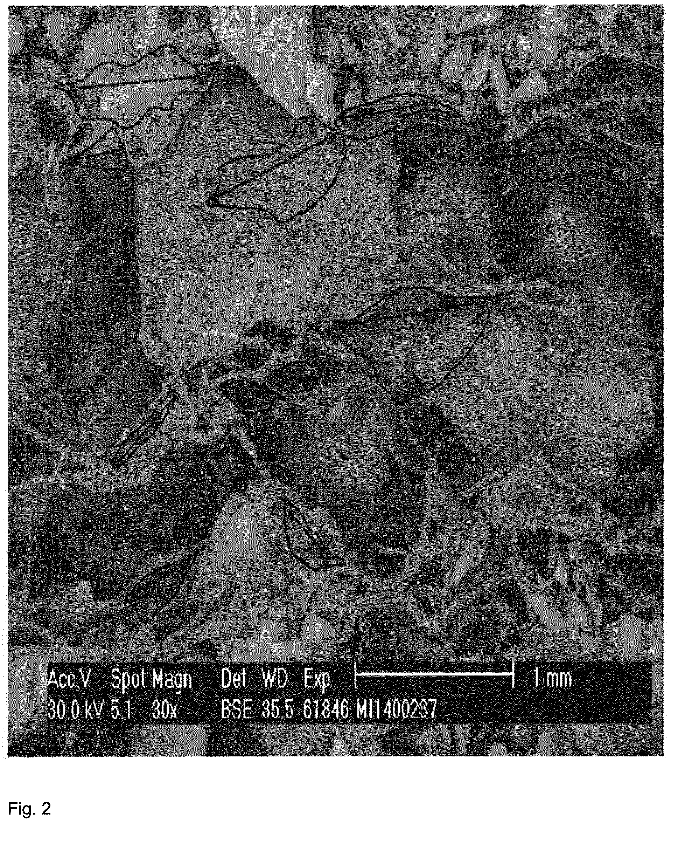

Unter dem Begriff "fiktiver" Maschendurchmesser wird erfindungsgemäß der weiteste Abstand (in der 2-dimensionalen Projektion) verstanden, der zwischen zwei Punkten, die auf den die Masche begrenzenden Fasern liegen, gemessen werden kann. In Figur 2 sind beispielhaft 11 Maschen mit einem "fiktiven" Maschendurchmesser von größer als 100 $\mu$m in der Maschenstruktur der Funktionsschicht des in Figur 1 gezeigten erfindungsgemäßen Flächengebildes eingezeichnet.

In einer bevorzugten Ausführungsform der Erfindung weist das erfindungsgemäße Flächengebilde eine Maschenstruktur auf, in der mehr als 30 %, vorzugsweise mehr als 50 % der Maschen einen "fiktiven" Maschendurchmesser von mehr als 50 $\mu$m, vorzugsweise von 100 $\mu$m bis 3000 $\mu$m, noch bevorzugter von 200 $\mu$m

bis 2000 µm aufweisen.

Um einen zufriedenstellenden Füllgrad mit Aerogelpartikeln zu erzielen kann es vorteilhaft sein, wenn mindestens 30%, vorzugsweise 50% bis 100% der Maschen einen Maschendurchmesser aufweisen, der größer ist als der mittlere Partikeldurchmesser der Aerogelpartikel.

Eine weitere Verbesserung der Einbindung der Aerogelpartikel in die Matrixstruktur wird erfindungsgemäß dadurch bewirkt, dass die Bindefasern zumindest teilweise mit den Aerogelpartikeln stoffschlüssig verbunden vorliegen. Der Begriff stoffschlüssig wird erfindungsgemäß im herkömmlichen Sinn verstanden d.h. dass die Verbindungspartner durch atomare oder molekulare Kräfte zusammengehalten werden. Dies umfasst u.a. klebende und zusammengeschmolzene Verbindungen.

Dabei ist nicht ausgeschlossen, dass die Verbindungspartner zusätzlich durch andere Verbindungsarten, wie z.B. Formschluss oder Kraftschluss, verbunden sind.

In einer bevorzugten Ausgestaltung der Erfindung wird die stoffschlüssige Verbindung zwischen Aerogelpartikeln und Bindefasern dadurch herbeigeführt, dass die Bindefasern während des Herstellungsverfahrens im zumindest teilweise geschmolzenen Zustand mit den Aerogelpartikeln in Kontakt gebracht werden. Hierzu können die Bindefasern beispielsweise mit einem Meltblown-oder Hot-Melt-Verfahren erzeugt, mit den Aerogelpartikeln in Kontakt gebracht und auf der Trägerschicht abgelegt werden. Vorteilhafterweise befinden sich die Bindefasern dabei auch während des Ablegens in einem zumindest teilweise geschmolzenen Zustand. Hieran ist vorteilhaft, dass gleichzeitig mit der Trägerschicht ein stoffschlüssiger Verbund hergestellt werden kann.

Mithin sind die Bindefasern in einer bevorzugten Ausführungsform der Erfindung als Meltblown-Fasern ausgebildet. Meltblown-Fasern lassen sich, beispielsweise anhand der Faserdicke, von anderen Fasern, beispielsweise herkömmlichen schmelzgesponnen Fasern unterscheiden. So weisen Meltblown-Fasern in der Regel einen Titer von 0,3 µm bis 50 µm auf. Dieser geringe Titer hat bei gleichem Gewichtsanteil der Bindefaser eine höhere Oberfläche der selbigen zufolge, was zu einer verbesserten Haftung führt.

Die Bindefasern weisen zweckmäßigerweise einen Schmelzpunkt auf, der unterhalb von 300°C noch bevorzugter von 70°C bis 300°C liegt, noch bevorzugter von 110°C bis 260°C und insbesondere von 110°C bis 220°C.

In einer vorteilhaften Ausgestaltung der Erfindung liegen die mittleren Titer der Bindefasern im Bereich von 0,3 bis 50 µm, vorzugsweise von 0,5 bis 20 µm, noch bevorzugter von 1 µm bis 5 µm. Vorteilhaft an der Verwendung von Bindefasern mit einem geringen Titer ist, dass die Ausbildung von Kältebrücken in z- Richtung verringert werden kann, was den Einsatz der Flächengebilde als thermisches Isoliermaterial begünstigt.

In einer weiteren vorteilhaften Ausgestaltung der Erfindung weisen die Bindefasern Faserlängen von weniger als 1000 mm, vorzugsweise von 0,1 mm bis 700 mm, noch bevorzugter von 0,2 mm bis 100 mm auf. Vorteilhaft an der Verwendung von Bindefasern mit einer hohen Faserlänge ist, dass ein sehr stabiles Bindefasernetzwerk gebildet werden kann, das insbesondere die feinen Aerogelpartikel bindet.

Eine niedrige Wärmeleitung in dem erfindungsgemäßen Flächengebilde kann auch dadurch begünstigt werden, dass die Funktionsschicht und mithin das gesamte Flächengebilde mit einer hohen Porosität versehen wird. Beispielsweise kann das Flächengebilde eine Porosität von 30 bis 85 %, bevorzugt von 40 bis 80 %, insbesondere von 50 bis 75% aufweisen. Hierdurch kann die Festkörperwärmekonduktion gering gehalten werden.

Praktische Versuche haben ergeben, dass sich die Einstellung einer mittleren Porengröße der Funktionsschicht auf weniger als 500 µm, vorzugsweise von 1 bis 500 µm, noch bevorzugter von 5 bis 300 µm, und insbesondere von 20 bis 120 µm günstig für eine niedrige Wärmeleitung ist. Sind die Poren größer, nimmt die Konvektion der Luft nämlich wieder zu, was die Wärmeleitung erhöht.

Gemäß einer bevorzugten Ausführungsform der Erfindung werden die Bindefasern durch ein Meltblownverfahren hergestellt.

Erfindungsgemäß wird der Begriff Meltblownverfahren im herkömmlichen Sinne verstanden. So ist Meltblown ein Verfahren, in dem Fasern direkt aus einem Polymergranulat hergestellt werden können. Hierbei wird ein Spinnvorgang in Kombination mit Heißluft genutzt, um Feinfasern herzustellen.

In der Regel wird in einem Extruder aufgeschmolzenes Granulat über eine Spinnpumpe direkt in den Düsenblock gefördert. Nach dem Austritt durch die Düsenspitze wird das Polymer durch komprimierte Prozess-Heißluft verstreckt. Dabei kann die Verstreckung der Fasern auf einfache Weise durch Variierung der Luftmengen [m³/h] und Temperatur eingestellt werden. Die entstehenden Mikrofasern werden auf einem gewünschten Substrat abgelegt.

Sollen Laminate hergestellt werden, kann die Meltblown-Anlage um eine Abrollstation vor und hinter der Düse erweitert werden. Mit einem Kalander können die einzelnen Schichten miteinander verbunden werden. So können zwei- oder mehrlagige Stoffe hergestellt werden.

Dieses Verfahren, bietet, wie weiter unten beschrieben, sehr viele Möglichkeiten, die Geometrie der Schmelzkleberfäden zur Erzielung eines gewünschten Effekts zu beeinflussen. Dazu kommt, dass mittels Meltblownverfahren Faserschichten hergestellt werden können, die eine ausgeprägte dreidimensionale Verteilung der Fasern aufweisen. Dies ist vorteilhaft, da die Aerogelpartikel hierdurch fest und verliersicher in der Funktionsschicht eingebunden werden können.

Folgende Parameter haben sich bei der Verwendung des Meltblownverfahrens zur Herstellung des erfindungsgemäßen Produkts als besonders geeignet erwiesen.

Bevorzugt ist Heißluft mit einer Temperatur von 120°C bis 300°C, besonders bevorzugt von 160 °C bis 210 °C.

Geeignete Luftmengen für die Verstreckung sind insbesondere von 150 m$^3$/h bis 500 m$^3$/h, noch bevorzugter von 200 m$^3$/h bis 300 m$^3$/h.

Für Anwendungen, bei denen die Geometrie der Schmelzkleberfäden keine größere Rolle spielt und daher auch nicht eingestellt werden muss, kann auch ein Hotmelt-Verfahren, bei welchem die Schmelze durch eine Hotmeltdüse austritt, eingesetzt werden.

In einer weiteren vorteilhaften Ausgestaltung der Erfindung enthalten die Bindefasern organische Polymere, ausgewählt aus der Gruppe bestehend aus aliphatischen Polyestern, aromatischen Polyestern, insbesondere Polyethylennaphthalat, Polybutylenterephthalat und Polyethylenterephthalat, aliphatischen Polyamiden, aromatischen Polyamiden, Polyvinylpyrrolidon, Polyvinylidenfluorid, Polyolefinen, insbesondere Polyethylen und Polypropylen. Es sind auch Copolymere möglich, so z.B. Styrolbutadiencopolymere, Copolyester, Copolyamide, Polyesterpolyamide und Polyolefincopolymere. Ganz bevorzugt besteht der Polymeranteil der Bindefasern aus den vorgenannten Polymeren und/oder deren Copolymeren.

Für die Synthese der Aerogelpartikel können grundsätzlich alle Metalloxide, Polymere und einige andere Stoffe als Ausgangsbasis eingesetzt werden. Erfindungsgemäß bevorzugt enthalten die Aerogelpartikel Siliciumoxid, organische Polymere, insbesondere Polyurethane, Cellulose, Acrylsäurederivate und/oder Kohlenstoff.

Der Anteil der Aerogel-Partikel im Flächengebilde kann in Abhängigkeit von den erwünschten Eigenschaften des Materials und seinem jeweiligen Einsatzgebiet variieren. Aufgrund der guten Einbindung der Aerogelpartikel in der Fasermatrix können dabei auch hohe Anteile an Aerogelpartikeln realisiert werden. So kann der Anteil der Aerogel-Partikel in dem Flächengebilde auch auf Werte von mehr als 40 Gew.-%, vorzugsweise von 10 Gew.-% bis 95 Gew.-%, noch bevorzugter von 40 Gew.-% bis 85 Gew.-%, jeweils bezogen auf das Gesamtgewicht des Flächengebildes, insbesondere bezogen auf das Gesamtgewicht von Trägerschicht und Funktionsschicht, eingestellt werden.

Die Aerogelpartikel weisen vorzugsweise eine Partikelgrößenverteilung mit einem d50-Wert von 50 $\mu$m bis 3 mm, noch bevorzugter von 200 $\mu$m bis 3 mm und oder einen d95-Wert von 50 $\mu$m bis 10 mm, noch bevorzugter von 500 $\mu$m bis 5 mm auf.

Im Bezug auf die Funktionsschicht beträgt der Anteil der Bindefasern vorteilhafter Weise von 5 bis 50 Gew.-%, noch bevorzugter von 7,5 Gew.-% bis 35 Gew.-%, und insbesondere von 7,5 Gew.-% bis 25 Gew.-%.

Der Anteil an Aerogelpartikeln in der Funktionsschicht beträgt vorteilhafter Weise von 50 bis 95 Gew.-%, noch bevorzugter von 65 bis 92,5 Gew.-%, und insbesondere von 75 bis 92,5 Gew.-%.

Grundsätzlich können erfindungsgemäß die verschiedensten Aerogel-Partikel eingesetzt werden. Beispielsweise für den Einsatz als Wärmeisolationsmaterial haben sich Aerogel-Partikel mit Porositäten über 60 %, Dichten unter 0,4 g/cm$^3$ und einer Wärmeleitfähigkeit von weniger als 40 mW/mK, vorzugsweise weniger als 25 mW/mK besonders geeignet erwiesen. In einer bevorzugten Ausführungsform der Erfindung ist das Aerogel ein SiO$_2$-Aerogel.

Die Dicke und das Flächengewicht der erfindungsgemäßen Flächengebilde können in Abhängigkeit von ihren erwünschten Eigenschaften und ihrem jeweiligen Einsatzgebiet variieren. So kann das Flächengebilde beispielsweise eine mittlere Dicke, gemessen nach Prüfvorschrift EN 29073 - T2, von 500 $\mu$m bis 50 mm, vorzugsweise von 1000 $\mu$m bis 25 mm und insbesondere von 5000 $\mu$m bis 20 mm und/oder ein Flächengewicht, gemessen nach EN 29073-T1, von 25 bis 3000 g/m$^2$, bevorzugt von 100 bis 2000 g/m$^2$, noch bevorzugter von 400 bis 1500 g/m$^2$ aufweisen.

Das erfindungsgemäße Flächengebilde weist vorzugsweise ein komplexes ZugModul von 5 bis 20 MPa, bevorzugt von 8 bis 12 MPa, gemessen, angelehnt an DIN 53513, bei 80°C auf.

Das erfindungsgemäße Flächengebilde weist vorzugsweise ein komplexes ZugModul von 3 bis 10 MPa, bevorzugt von 5 bis 8 MPa, gemessen, angelehnt an DIN 53513, bei 120°C auf.

Das erfindungsgemäße Flächengebilde weist vorzugsweise ein komplexes ZugModul von 1 bis 10 MPa, bevorzugt von 2 bis 5 MPa, gemessen, angelehnt an DIN 53513, bei 140°C auf.

Erfindungsgemäß bevorzugt liegt die Funktionsschicht unmittelbar auf der Trägerschicht angeordnet vor. Denkbar ist jedoch auch, dass zwischen Funktionsschicht und Trägerschicht weitere Schichten, beispielsweise wärmereflektierende Schichten, wie z.B. Metall/Kunststofflaminate, angeordnet sind.

Ebenfalls denkbar ist, dass auf der Trägerschicht und/oder der Funktionsschicht, jeweils als Außenschichten Deckschichten angeordnet sind. Die Deckschichten können dabei beispielsweise Kunststofffolien, Metallfolien, metallisierte Kunststofffolien und/ oder vorzugsweise mindestens eine weitere Vliesstofflage enthalten und/oder vorzugsweise aus den vorgenannten Materialien bestehen. In dieser Ausführungsform weist das Flächengebilde vorzugsweise eine mittlere Dicke, gemessen nach Prüfvorschrift EN 29073 - T2, von 100 $\mu$m bis 60 mm, vorzugsweise von 500 $\mu$m bis 25 mm und insbesondere von 1000 $\mu$m bis 10 mm und/oder ein Flächengewicht, gemessen nach EN 29073-T1, von 100 bis 5000 g/m$^2$, bevorzugt von 200 bis 2500 g/m$^2$, noch bevorzugter von 400 bis 1500 g/m$^2$ auf.

Gemäß einer bevorzugten Ausführungsform der Erfindung enthält die Trägerschicht einen Vliesstoff. Bevorzugt besteht sie aus einem Vliesstoff.

Gemäß einer weiteren bevorzugten Ausführungsform der Erfindung enthält die Trägerschicht ein Papier. Bevorzugt besteht sie aus einem Papier.

Der Vliesstoff kann nach den üblichen Vliesstoffherstellungsverfahren gefertigt sein, beispielsweise nach dem Nasslege-, dem Krempel-, und dem Spinnvliesverfahren.

Die mittlere Dicke der Trägerschicht beträgt vorzugsweise, gemessen nach Prüfvorschrift EN 29073 - T2, von 10 $\mu$m bis 1000 $\mu$m, vorzugsweise von 20 $\mu$m bis 150 $\mu$m und insbesondere von 40 $\mu$m bis 100 $\mu$m.

Das Flächengewicht der Trägerschicht beträgt vorzugsweise, gemessen nach EN 29073-T1, von 10 g/m$^2$ bis 250 g/m$^2$, bevorzugt von 30 bis 150 g/m$^2$, noch bevorzugter von 40 bis 100 g/m$^2$.

Die Porengröße der Trägerschicht beträgt, gemessen angelehnt an Prüfvorschrift ASTM E1294, 10 $\mu$m bis 1250 $\mu$m, vorzugsweise von 50 $\mu$m bis 500 $\mu$m und insbesondere von 100 $\mu$m bis 400 $\mu$m.

Erfindungsgemäß wurde gefunden, dass diese Porengrößen es besonders gut ermöglichen, auch den Feinanteil der Aerogelpartikel in der Funktionsschicht zurückzuhalten und gleichzeitig einen ausreichenden Luftstrom während der Herstellung durch die Trägerschicht durchzulassen. Der Feinanteil ist vorteilhaft, weil er die Packungsdichte der Funktionsschicht erhöht und somit die Isolationseigenschaften des Flächengebildes verbessert.

Ebenfalls denkbar ist, dass auch der Vliesstoff, der in der Trägerschicht vorliegen kann, nach dem Meltblown- Verfahren hergestellt wird.

Die Fasern des optional in der Trägerschicht vorhandenen Vliesstoffs sind vorzugsweise thermisch stabil. So weisen sie zweckmäßigerweise einen Schmelzpunkt oberhalb von 120 °C noch bevorzugter von 120 °C bis 350 °C, noch bevorzugter von 150 °C bis 350 °C und insbesondere von 150 °C bis 200 °C auf. Die Fasern des Vliesstoffs in der Trägerschicht sind ferner vorzugsweise dimensionstabil. So ist es vorteilhaft, wenn der Vliesstoff einen Flächenschrumpf bei 150°C < 10 %, insbesondere zwischen 0,5 % und 5 % aufweist. Bei 175°C beträgt der Flächenschrumpf vorteilhafterweise weniger als 10 %, insbesondere von 2 % bis 5 %.

In einer bevorzugten Ausgestaltung der Erfindung enthalten die Fasern des optional in der Trägerschicht vorhandenen Vliesstoffs organische Polymere, ausgewählt aus der Gruppe bestehend aus Polyolefinen, Polyvinylidenfluorid, Polyamiden, insbesondere aromatischen Polyamiden, Polyester, vorzugsweise aromatischen Polyestern insbesondere Polybutylenterephthalat, Polyethylennaphtalat und Polyethylenterephthalat, Preoxfasern, Polyacrylnitril-(PAN)fasern, Polysulfonfasern, Polyimidfasern, Polyphenylensulfidfasern, Kohlefasern, Naturfasern, vorzugsweise Cellulose und/oder Gemische oder Copolymere hiervon. Ganz bevorzugt bestehen die Fasern des Vliesstoffs in der Trägerschicht aus den vorgenannten Polymeren und/oder deren Copolymeren. Vorteilhaft an der Verwendung dieser Fasern ist, dass sie mechanisch flexibel und einfach zu verarbeiten sind. Denkbar ist auch, Bikomponentenfasern, wie z.B. Core Shell Fasern, einzusetzen. Diese können die zuvor genannten Polymere aufweisen oder enthalten.

Ebenfalls denkbar ist, dass die Fasern des optional in der Trägerschicht vorhandenen Vliesstoffs anorganische Fasern enthalten, vorzugsweise ausgewählt aus der Gruppe bestehend aus Glasfasern oder Keramikfasern. Vorteilhaft an der Verwendung dieser Fasern ist, dass sie eine sehr hohe Temperaturbeständigkeit haben.

Der Titer der Fasern des Vliesstoffs in der Trägerschicht liegt vorteilhafter Weise im Bereich von 0,5 dtex bis 20 dtex, bevorzugter von 1,3 dtex bis 15 dtex, noch bevorzugter von 3 bis 10 dtex.

Das erfindungsgemäße Flächengebilde kann auf einfache Weise zu Formkörpern, beispielsweise Matten oder Platten, geformt werden.

Das erfindungsgemäße Flächengebilde und Formkörper, die dieses enthalten, eignen sich hervorragend zur Wärmedämmung, beispielsweise zur thermischen Isolation von Räumen, Transportfahrzeugen und Transportbehältern. Besonders geeignet sind sie für die thermische Isolation bei beengtem Raum, beispielsweise von Hochtemperatursupraleitern und Ölpipelines. Als ebenfalls hervorragend geeignet hat sich das erfindungsgemäße Flächengebilde zur Schalldämpfung, als Filtermaterial und/oder als Adsorptionsmaterial für Gase, Dämpfe, Aerosole und Flüssigkeiten erwiesen.

Diese Verwendungen und Produkte sind ebenfalls Gegenstand der vorliegenden Erfindung.

Ein weiterer Gegenstand der vorliegenden Erfindung ist ein Verfahren zur Herstellung des erfindungsgemäßen Flächengebildes, bei dem aus einer Düse ein Schmelzkleberstrahl aus Schmelzkleberfäden und/oder -tröpfchen in Richtung einer beabstandet an der Düse entlanggeführten Trägerschicht gesprüht wird, der Schmelzkleberstrahl in einem vorgegebenen Bereich zwischen der Düse und der Trägerschicht mit Aerogelpartikeln beladen, und der beladene Schmelzkleberstrahl unter Ausbildung der Funktionsschicht auf der Trägerschicht abgelegt wird.

Es war für den Fachmann überraschend, dass der Schmelzkleberstrahl mit Aerogelpartikeln beladen werden kann. Aerogelpartikel weisen nämlich eine sehr geringe Dichte auf und der Fachmann musste erwarten, dass die Aerogelpartikel sich nicht in den Schmelzkleberstrahl einbinden lassen sondern durch die Prozess-Heißluft weggeblasen werden.

Zur Herstellung des Schmelzkleberstrahls wird vorzugsweise in einem Extruder aufgeschmolzenes Granulat über eine Spinnpumpe direkt in den Düsenblock gefördert. Nach dem Austritt durch die Düsenspitze wird das Polymer zweckmäßigerweise durch komprimierte Prozess-Heißluft verstreckt. Dabei kann die Verstreckung der Fasern auf einfache Weise durch Variierung der Luftmenge und Temperatur eingestellt werden. Die entstehenden Mikrofasern können auf einem gewünschten Substrat abgelegt werden.

Dieses Verfahren, bietet wie weiter unten beschrieben, sehr viele Möglichkeiten, die Geometrie der Schmelzkleberfäden zur Erzielung eines gewünschten Effekts zu beeinflussen. Dazu kommt, dass mittels Meltblownverfahren Faserschichten hergestellt werden können, die eine ausgeprägte dreidimensionale Verteilung der Fasern aufweisen. Dies ist vorteilhaft, da die Aerogelpartikel hierdurch fest und verliersicher in der Funktionsschicht eingebunden werden können. Folgende Parameter haben sich bei der Verwendung des Meltblownverfahrens zur Herstellung des erfindungsgemäßen Produkts als besonders geeignet erwiesen.

Bevorzugt ist Heißluft mit einer Temperatur von 120°C bis 300°C, besonders bevorzugt von 160 °C bis 210 °C.

Geeignete Luftmengen für die Verstreckung sind insbesondere von 150 m$^3$/h bis 500 m$^3$/h, noch bevorzugter von 200 m$^3$/h bis 300 m$^3$/h.

In einer bevorzugten Ausführungsform der Erfindung erfolgt das Beladen mit Füllmaterial über einen Fluidstrom, wobei der beladene Fluidstrom mit dem Füllmaterial in einer weiteren bevorzugten Ausführungsform der Erfindung mittels eines Injektors von der Seite her in den Schmelzkleberstrahl hinein gesprüht oder geschossen wird. Diese Vorgehensweise erlaubt eine zielgenaue Positionierung des Füllmaterials in dem Schmelzkleberstrahl. Aber auch ein Einstreuen des Füllmaterials beispielsweise mittels einer Walze oder über ein Förderband ist möglich.

Weiterhin können mehrere Zuführeinrichtungen sowohl für den Schmelzkleber als auch für das Füllmaterial vorgesehen sein. Diese können beispielsweise in Förderrichtung des Trägers im Wechsel hintereinander angeordnet sein, wodurch eine Schichtenfolge aus einzelnen Lagen in Aufwachsrichtung der Funktionsschicht erzeugt werden kann. Hierbei ist es auch denkbar, unterschiedliche Füllmaterialien einzusetzen, so dass sich die einzelnen Lagen in ihren funktionellen Eigenschaften voneinander unterscheiden.

Eine kontinuierliche Verfahrensführung wird dadurch begünstigt, dass der Fluidstrom nach Art einer Saugstrahlpumpe so geführt wird, dass er am Ort der Füllmaterialzuführung einen Unterdruck erzeugt, wodurch dass Füllmaterial angesaugt und mit dem Strahl mitgerissen wird. Bei dieser Verfahrensvarianten wird vorteilhafterweise auch das Füllmaterial kontinuierlich zugeführt, beispielsweise mittels eines Förderbandes, das über so genannte Streurinnen kontinuierlich mit Füllmaterial versorgt wird. Bei Verwendung mehrerer Streurinnen können auch mehrere unterschiedliche Füllmaterialien gleichzeitig zugeführt werden.

Die Trägerschicht wird, wie im Stand der Technik üblich, vorzugsweise mittels eines porösen, absaugbaren Bandes unter der Schmelzkleberdüse und der Füllmaterialzuführung entlanggeführt.

Es liegt auf der Hand, dass sich das erfindungsgemäße Verfahren auch hervorragend zur Einstellung eines gewünschten Konzentrationsprofils, insbesondere eines Konzentrationsgradienten, in der Funktionsschicht eignet.

Dieses Konzentrationsprofil bzw. -gradient kann sowohl den Anteil an Füllmaterial als auch die Schmelzkleberverteilung betreffen. Geeignete Parameter zur Einstellung des gewünschten Konzentrationsprofils sind z. B. ohne Beschränkung der Allgemeinheit die geometrische Anordnung, wie z. B. Abstände, Winkel usw., der Schmelzkleberdüse, der Träger- und der Deckschichtzuführungen und der Zuführeinrichtung für das Füllmaterial relativ zueinander. Weiterhin können Fluidströme zur Strahllenkung und -förderung eingesetzt und zur Erzielung eines gewünschten Konzentrationsprofils sowohl hinsichtlich ihrer Ausrichtung als auch Stärke variiert werden. Ebenso kann die Düsen- und/oder Injektorgeometrie variiert werden, um nur einige Beispiele zu nennen. Die genannten Maßnahmen können selbstverständlich einzeln oder in Kombination eingesetzt werden.

Ein bevorzugtes Konzentrationsprofil zeichnet sich dadurch aus, dass der Schmelzkleberanteil in der Funktionsschicht im Bereich der Grenzflächen zur Trägerschicht bzw. Deckschicht zur Erzielung einer guten Haftung am größten ist und im inneren Bereich der Schicht nur noch so groß ist, dass einerseits eine ausreichende Fläche zum Anhaften des Füllmaterials an den Schmelzkleberfäden zur Verfügung steht, andererseits dieses Material jedoch, um die Wirkung der Funktionsschicht nicht zu beeinträchtigen, möglichst wenig durch Schmelzkleber bedeckt ist.

Als Schmelzkleber sind prinzipiell alle spinnbaren Stoffe, wie beispielsweise Co-Polyester, Polybutylenterephtalat, Co-Polyamide, thermoplastische Polyurethane und Polyolefine geeignet. Auch thermoplastisch verarbeitbare Melaminharze sind geeignet. Vorzugsweise werden polyolefinische Hotmelts eingesetzt. Die Schmelzkleberfäden werden vorzugsweise mittels eines Meltblown-Verfahrens erzeugt, da dieses Verfahren, wie weiter unten beschrieben wird, sehr viele Möglichkeiten bietet, die Geometrie der Schmelzkleberfäden zur Erzielung eines gewünschten Effekts zu beeinflussen.

Bei einem Meltblownverfahren wird das Schmelzklebermaterial in einem Schmelzaggregat, beispielsweise in einem Fassschmelzer, Schmelztank oder Extruder, aufgeschmolzen und mittels geeigneter Pumpen und Fördereinrichtungen ggf. über einen Puffer-/Verteilerbehälter der so genannten Meltblowndüse zugeführt. Diese weist eine Vielzahl von Bohrungen auf, durch welche das Schmelzklebermaterial unter Einwirkung eines Luftstroms (Primärluft) unter Ausbildung von Schmelzkleberfäden herausgedrückt wird. Die Schmelzkleberfäden werden durch den ebenfalls aus der Düse austretende Luftstrom (T=180°C, 276 m$^3$/h), verstreckt und geführt. Die Geometrie der Schmelzkleberfäden, beispielsweise der Faserdurchmesser, kann bei diesem Verfahren in einfacher Weise über die Lochgeometrie, die Lochzahl, den Durchsatz an Material durch ein Loch, die Menge an Primärluft, sowie die Temperatur eingestellt werden.

Das erfindungsgemäße Verfahren ist jedoch nicht auf den Einsatz eines Meltblown-Verfahrens beschränkt. Für Anwendungen, bei denen die Geometrie der Schmelzkleberfäden keine größere Rolle spielt und daher auch nicht eingestellt werden muss, kann auch ein Hotmelt-Verfahren, bei welchem die Schmelze durch eine Hotmeltdüse austritt, eingesetzt werden.

Sollen Laminate hergestellt werden, kann die Meltblownanlage um eine Abrollstation vor und hinter der Düse erweitert werden. Mit einem Kalander können die einzelnen Schichten miteinander verbunden werden. So können zwei- oder mehrlagige Stoffe hergestellt werden.

In einer bevorzugten Ausführungsform des erfindungsgemäßen Verfahrens wird weiterhin eine Deckschicht kontinuierlich zugeführt und auf der Funktionsschicht abgelegt, wobei die Deckschicht so geführt und/oder der Schmelzkleberstrahl so ausgerichtet werden, dass die Deckschicht vor dem Ablegen auf der Funktionsschicht auf ihrer der Funktionsschicht zugewandten Seite mit unbeladenem Schmelzkleber aus dem Schmelzkleberstrahl besprüht wird.

Diese Ausführungsform ist vorteilhaft, da sie es in einfacher Weise erlaubt eine feste, nur schwer lösbare Anbindung der Deckschicht an den Verbund aus Trägerschicht und Funktionsschicht mittels eines verbindenden Schmelzkleberauftrags zu erhalten, ohne dass es hierzu, eines weiteren Verfahrensschrittes bedarf. Die Vorteile eines Inline-Verfahrens bleiben erhalten. Das Verfahren ist einfach und kostengünstig durchzuführen. Prozessbedingt kommen bei dem erfindungsgemäßen Inline-Verfahren sehr viel geringere Klebermengen als beim nachträglichen Aufkleben der Deckschicht zum Einsatz. Die geringeren Klebemengen sind vorteilhaft, da sie zu einer besseren thermischen Isolation des Flächengebildes führen. Gleichwohl wird eine sehr gute Haftung erzielt. Versuche haben ergeben, dass erfindungsgemäß aufgebrachte Deckschichten sich wesentlich schwerer delaminieren lassen als auf herkömmliche Weise, beispielsweise im Rahmen eines Airlaidverfahrens angeklebte Deckschichten.

Der Verbund aus Trägerschicht, Funktionsschicht und gegebenenfalls Deckschicht kann zusätzlich einem Verfestigungsschritt unterzogen werden.

Figurenbeschreibung

In Figur 1 ist eine Querschnittsaufnahme eines erfindungsgemäßen Flächengebildes dargestellt. Die Aerogelpartikel sind fest in einer dreidimensionalen Fasermatrix eingebettet.

In Figur 2 sind beispielhaft 11 Maschen mit einem "fiktiven" Maschendurchmesser von mindestens 100 μm in der Funktionsschicht des in Figur 1 gezeigten erfindungsgemäßen Flächengebildes eingezeichnet.

Das nachfolgende Beispiel erläutert die Erfindung ohne diese zu begrenzen.

Die in der vorliegenden Beschreibung und insbesondere im folgenden Beispiel angegebenen Parameter werden wie folgt bestimmt:

Gewicht:

Gemäß Prüfvorschrift EN 29073 - T1 werden für die Bestimmung der Flächengewichte jeweils 3 100x100mm große Proben ausgestanzt, die Proben gewogen und der Messwert mit 100 multipliziert.

Dicke:

Gemäß Prüfvorschrift EN 29073 - T2 werden die Dicken mit einem Präzisions-Dickenmessgerät Modell 2000 U/ Elektrik gemessen. Die Messfläche beträgt 2cm$^2$, der Messdruck 1000 cN/cm$^2$.

Bestimmung der Porendurchmesser:

Die mittleren Porendurchmesser sowie der maximale Porendurchmesser ("bubble point") werden gemäß der Norm ASTM E 1294 (Coulter Porometer) bestimmt.

Flächenschrumpf:

Für die Bestimmung des Schrumpfes werden 100 mm x 100 mm große Muster ausgestanzt und eine Stunde bei 150° bzw. 175°C in einem Labdryer der Fa. Mathis gelagert. Anschließend wird der Schrumpf der Muster bestimmt.

DMA Messungen:

Die dynamischen Untersuchungen werden gemäß DIN 53513 durchgeführt.

Thermische Leitfähigkeit:

Der ermittelte Wärmedurchgangswiderstand entspricht dem nach ISO 11 092 / DIN EN 31 092 gemessenen Rct-Wert.

Beispiel:

Ein Polyolefinhotmeltpolymer wird mit einer Mindesttemperatur von 180°C in einem Extruder aufgeschmolzenen und zu einer Meltblowndüse geführt. Das geschmolzene Polymer wird per Druck aus der Düse herausgedrückt und mit Hilfe eines heißen Luftstrahles versponnen und verstreckt (T=180°C, 276 m$^3$/h), so dass sich Meltblownbindefasern bilden. In den Meltblownbindefaserstrahl werden über eine Förderrinne kontinuierlich Aerogelpartikel (d95 < 5 mm) gestreut und das Bindefaser / Aerogelpartikel Gemisch kontinuierlich auf ein, sich mit einer Bandgeschwindigkeit von 10 m/min) bewegendes, Vliesstoffsubstrat als Trägerschicht (PP Spinnvlies, 60 g/m$^2$, Fasertiter: 65, dtex) abgelegt. Hierbei bildet sich die Funktionsschicht auf der Trägerschicht aus. Als Decklage wird auf diesen Verbund eine weitere Vliesstofflage (PP Spinnvlies, 60 g/m$^2$, Fasertiter 65 dtex), ebenfalls kontinuierlich, abgelegt und mit einem Walzenpresswerk bei einem Druck von 4bar (Liniendruck 17 N/mm) bei 23°C, unter Ausbildung eines erfindungsgemäßen Flächengebildes, verpresst.

Die Trägerschicht- und die Decklage sind fest mit der Aerogel enthaltenden Funktionsschicht verankert. Das erfindungsgemäße Flächengebilde kann so zu einem Wickel aufgerollt werden, es rieselt kein Aerogel aus dem Verbund.

Das Gewicht des erfindungsgemäßen Flächengebildes beträgt, gemessen nach Prüfvorschrift EN 29073 - T1 460 g/m$^2$. Das Aerogelflächengewicht beträgt 295g/m$^2$.

Die Dicke des erfindungsgemäßen Flächengebildes, gemessen nach Prüfvorschrift EN 29073 - T2, beträgt 6 mm.

Die thermisch Leitfähigkeit des erfindungsgemäßen Flächengebildes gemessen nach ISO 11 092 / DIN EN 31 092 beträgt 0,021 W/mK.

Der mittlere Porendurchmesser des erfindungsgemäßen Vliesstoffes beträgt 66,5 $\mu$m.

Das komplexe Zugmodul des erfindungsgemäßen Flächengebildes, gemessen angelehnt an DIN 53513, beträgt 11 MPa bei 80°C; bei 100°C 9,3 MPa; bei 120°C 6 Mpa und bei 150°C 1,7 MPa.

**Patentansprüche**

1. Flächengebilde umfassend wenigstens eine ein Fasermaterial enthaltende Trägerschicht und wenigstens eine Funktionsschicht, wobei die Funktionsschicht mit Aerogelpartikeln beladene Bindefasern enthält, wobei die Bindefasern in Form einer dreidimensionalen Matrix vorliegen, in der die Aerogelpartikel aufgenommen sind und wobei die Aerogelpartikel zumindest teilweise mit den Bindefasern stoffschlüssig verbunden vorliegen.

2. Flächengebilde nach Anspruch 1, **dadurch gekennzeichnet, dass** die Aerogelpartikel derart verliersicher in der Funktionsschicht eingebunden sind, dass bei einem Verliertest mehr als als 90 Gew.% der Aerogelpartikel im Flächengebilde verbleiben.

3. Flächengebilde nach Anspruch 1 oder 2, **dadurch**

gekennzeichnet, dass die Aerogelpartikel Siliciumoxid, Polyurethane, Cellulose, Acrylsäurederivate und/oder Kohlenstoff enthalten.

4. Flächengebilde nach einem oder mehreren der vorangehenden Ansprüche, **dadurch gekennzeichnet, dass** in einer mikroskopischen Aufnahme eines Querschnittes der Funktionsschicht, bezogen auf einen Ausschnitt mit den Abmessungen von 4 mm x 3 mm, bei 30-facher Vergrößerung mindestens 2, vorzugsweise mindestens 5, noch bevorzugter mindestens 10 Maschen mit einem fiktiven Maschendurchmesser von mindestens 100 $\mu$m detektierbar sind.

5. Flächengebilde nach einem oder mehreren der vorangehenden Ansprüche, **dadurch gekennzeichnet, dass** die stoffschlüssige Verbindung zwischen Aerogelpartikeln und Bindefasern dadurch herbeigeführt, dass die Bindefasern während des Herstellungsverfahrens im zumindest teilweise geschmolzenen Zustand mit den Aerogelpartikeln in Kontakt gebracht werden.

6. Flächengebilde nach einem oder mehreren der vorangehenden Ansprüche, **dadurch gekennzeichnet, dass** die Bindefasern als Meltblown-Fasern ausgebildet sind.

7. Flächengebilde nach einem oder mehreren der vorangehenden Ansprüche, **dadurch gekennzeichnet, dass** die Bindefasern einen mittleren Titer im Bereich von 0,3 bis 50 $\mu$m aufweisen.

8. Flächengebilde nach einem oder mehreren der vorangehenden Ansprüche, **dadurch gekennzeichnet, dass** die Bindefasern Faserlängen von weniger als 1000 mm, vorzugsweise von 0,1 mm bis 700 mm, noch bevorzugter von 0,2 mm bis 100 mm aufweisen.

9. Flächengebilde nach einem oder mehreren der vorangehenden Ansprüche, **dadurch gekennzeichnet, dass** die Funktionsschicht eine mittlere Porengröße von weniger als 500 $\mu$m aufweist.

10. Flächengebilde nach einem oder mehreren der vorangehenden Ansprüche, **dadurch gekennzeichnet, dass** die Bindefasern organische Polymere enthalten, ausgewählt aus der Gruppe bestehend aus aliphatischen Polyestern, aromatischen Polyestern, insbesondere Polyethylennaphthalat, Polybuthylenterephthalat und Polyethylenteraphthalat, aliphatischen Polyamiden, aromatischen Polyamiden, Polyvinylpyrrolidon, Polyvinylidenfluorid, Polyolefinen, insbesondere Polyethylen und Polypropylen.

11. Flächengebilde nach einem oder mehreren der vorangehenden Ansprüche, **dadurch gekennzeichnet, dass** der Anteil der Aerogel-Partikel in dem Flächengebilde 40 Gew.-% bis 95 Gew.-%, bezogen auf das Gesamtgewicht von Trägerschicht und Funktionsschicht beträgt.

12. Flächengebilde nach einem oder mehreren der vorangehenden Ansprüche, **dadurch gekennzeichnet, dass** auf der Trägerschicht und/oder der Funktionsschicht, jeweils als Außenschichten Deckschichten angeordnet sind.

13. Verwendung eines erfindungsgemäßen Flächengebildes nach einem oder mehreren der vorhergehenden Ansprüche zur Wärmedämmung, zur Schalldämpfung, als Filtermaterial und/oder als Adsorptionsmaterial für Gase, Dämpfe, Aerosole und Flüssigkeiten.

14. Verfahren zur Herstellung eines erfindungsgemäßen Flächengebildes nach Anspruch 1 bis 12, bei dem aus einer Düse ein Schmelzkleberstrahl aus Schmelzkleberfäden und/oder -tröpfchen in Richtung einer beabstandet an der Düse entlanggeführten Trägerschicht gesprüht wird, der Schmelzkleberstrahl in einem vorgegebenen Bereich zwischen der Düse und der Trägerschicht mit Aerogelpartikeln beladen, und der beladene Schmelzkleberstrahl unter Ausbildung der Funktionsschicht auf der Trägerschicht abgelegt wird.

Fig.1

Fig. 2

Europäisches Patentamt
European Patent Office
Office européen des brevets

# EUROPÄISCHER RECHERCHENBERICHT

Nummer der Anmeldung

EP 16 17 8975

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 0 799 343 B1 (HOECHST AG [DE]) 22. März 2000 (2000-03-22) | 1-13 | INV. B32B5/02 |
| Y | * Absätze [0001] - [0002], [0012] - [0013], [0018], [0020] - [0022], [0029], [0037], [0040] - [0042] - Absätze [0036], [0044]; Ansprüche 1-2, 10-11, 14; Beispiel 1 * ----- | 6 | B32B5/08 B32B5/16 B32B5/22 B32B5/24 B32B5/26 B32B5/30 |
| X | DE 195 48 128 A1 (HOECHST AG [DE]) 26. Juni 1997 (1997-06-26) | 1,3,5, 10-13 | D04H1/413 D04H1/435 |
| A | * Seite 4, Zeilen 20-25; Ansprüche 1-5,9-13 * ----- | 2 | D04H1/4374 D04H1/54 D04H1/541 |
| X | DE 10 2013 111459 A1 (ELRINGKLINGER AG [DE]) 23. April 2015 (2015-04-23) * Ansprüche 1-2,4-8,10-11 * ----- | 1,3,14 | D04H1/544 D04H1/55 D04H1/559 D04H1/56 |
| Y | US 5 053 157 A (LLOYD WILLIAM D [US]) 1. Oktober 1991 (1991-10-01) * Ansprüche 1,4 * ----- | 6 | D04H13/00 |

RECHERCHIERTE SACHGEBIETE (IPC)

B32B
D04H

Der vorliegende Recherchenbericht wurde für alle Patentansprüche erstellt

| Recherchenort | Abschlußdatum der Recherche | Prüfer |
|---|---|---|
| Den Haag | 16. November 2016 | Derz, Thomas |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 17 8975

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-11-2016

| Im Recherchenbericht angeführtes Patentdokument | Datum der Veröffentlichung | Mitglied(er) der Patentfamilie | Datum der Veröffentlichung |
|---|---|---|---|
| EP 0799343 B1 | 22-03-2000 | AT 191021 T | 15-04-2000 |
| | | AU 4388996 A | 10-07-1996 |
| | | CA 2208510 A1 | 27-06-1996 |
| | | CN 1170445 A | 14-01-1998 |
| | | DE 59508075 D1 | 27-04-2000 |
| | | EP 0799343 A1 | 08-10-1997 |
| | | ES 2146795 T3 | 16-08-2000 |
| | | FI 972677 A | 19-06-1997 |
| | | JP 4237253 B2 | 11-03-2009 |
| | | JP H10510888 A | 20-10-1998 |
| | | KR 100368851 B1 | 12-05-2003 |
| | | NO 972850 A | 15-08-1997 |
| | | PL 320877 A1 | 10-11-1997 |
| | | RU 2147054 C1 | 27-03-2000 |
| | | US 5786059 A | 28-07-1998 |
| | | WO 9619607 A1 | 27-06-1996 |
| DE 19548128 A1 | 26-06-1997 | AT 192791 T | 15-05-2000 |
| | | CA 2241085 A1 | 03-07-1997 |
| | | DE 19548128 A1 | 26-06-1997 |
| | | DK 0868556 T3 | 25-09-2000 |
| | | EP 0868556 A2 | 07-10-1998 |
| | | ES 2147947 T3 | 01-10-2000 |
| | | JP 4014635 B2 | 28-11-2007 |
| | | JP 2000506570 A | 30-05-2000 |
| | | JP 2006077386 A | 23-03-2006 |
| | | NO 982509 A | 02-06-1998 |
| | | US 6479416 B1 | 12-11-2002 |
| | | WO 9723675 A2 | 03-07-1997 |
| DE 102013111459 A1 | 23-04-2015 | DE 102013111459 A1 | 23-04-2015 |
| | | WO 2015055338 A1 | 23-04-2015 |
| US 5053157 A | 01-10-1991 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0799343 B1
- US 20060125158 A1
- US 20100107381 A1